# EUROPEAN PATENT SPECIFICATION

(11) **EP 0 763 179 B1**
(45) Date of publication and mention of the grant of the patent: **07.11.2001**
(21) Application number: 94922448.9
(22) Date of filing: 23.06.1994
(51) Int. Cl.: F23G 5/02, F23G 5/46, F23J 15/02, F23J 1/00, F23L 15/04

(54) **SYSTEM FOR MANUFACTURING ASH PRODUCTS AND ENERGY FROM REFUSE WASTE**
ANLAGE ZUR ERZEUGUNG VON ASCHE ENTHALTENDEN PRODUKTEN UND ENERGIE AUS ABFÄLLEN
SYSTEME DE PRODUCTION DE PRODUITS A BASE DE CENDRE ET D'ENERGIE A PARTIR DE DECHETS

(43) Date of publication of application: 19.03.1997
(73) Proprietor: ENERGY ANSWERS CORPORATION, Albany, NY 12207 (US)
(72) Inventor: SUTIN, Gordon, L., Dundas, Ontario LH3 MC (CA); MAHONEY, Patrick, F., Rensselear, NY 12144 (US)
(74) Representative: LOUIS, PÖHLAU, LOHRENTZ & SEGETH
(86) International application number: US9407116
(87) International publication number: WO9600365

(56) References cited:
- US-A- 3 311 090
- US-A- 3 670 669
- US-A- 4 193 354
- US-A- 4 669 397
- US-A- 4 774 893
- US-A- 4 917 733
- US-A- 4 993 331
- US-A- 4 997 081
- US-A- 5 078 065
- US-A- 5 205 227

## Description

### BACKGROUND OF THE INVENTION

The present invention relates to a method and system for the recovery of resources from solid waste by efficient and environmentally sound combustion, the production of energy in the form of steam and electricity, the cleaning of combustion gases to remove undesirable combustion bi-products therefrom, and the manufacture of high quality ash products which can be separated into valuable reusable components. Such a system and method are known from US-A-3 670 669.

It is a goal of this invention to provide a method of recovering resources by combusting solid waste as a means of manufacturing energy and ash, which will minimize or eliminate various problems and inefficiencies normally experienced in other methods used for the combustion of waste.

It is another goal of the invention to manufacture from solid waste combustion ash, an aggregate product which contains minimum amounts of combustible and metal materials so that valuable materials can be easily separated from the ash for recycling and/or reuse.

It is also a purpose of this invention to provide means for shredding solid waste in a single shredding stage that is followed by magnetic separation of ferrous metals in order to create a processed refuse fuel (PRF) that is capable of being burned "in-suspension" in a waterwall boiler.

It is another purpose of the present invention to provide a dry bottom ash removal system capable of handling ash generated and providing it in free flowing form for processing without the addition of water except for dust control.

It is another purpose of this invention to provide an improved method for moving waste for processing.

It is yet another purpose of the invention to keep the fly ash separate from boiler bottom ash in order to facilitate the neutralization and stabilization of heavy metals contained therein and to provide an opportunity for the recovery and reuse of the neutralized and stabilized fly ash.

As a net result of these purposes, it is the intent of this invention to recover as much energy and reusable material from waste as is practical and to approach zero disposal requirements.

### SUMMARY OF THE INVENTION

These purposes, goals and objectives are achieved in the present invention with a system for manufacturing energy and ash products from solid waste according to claim 1. The system includes a station for receiving solid waste for processing and separating out a portion of solid waste which cannot be shredded and processed. Examples of non-processable wastes are bulky items, stringy items, appliances, etc. The non-processable portion of the waste is disposed of in a properly designed and permitted landfill. Also included in the invention is apparatus for removing ferrous material from the shredded solid waste to create processed refuse fuel (PRF), apparatus for delivering the PRF directly to the furnace system or to storage, and apparatus for retrieving PRF from storage and feeding the PRF as needed into the furnace system.

Apparatus for storage and/or feeding transfers the processed refuse fuel (PRF) in a manner such that a density of the processed refuse fuel is always controlled for continuous non-problematic flow. Apparatus for treatment of residual gases created from the burning of solid waste is included. The treatment includes, but is not necessarily limited to, neutralization of acid gases, capture of particulate matter, reduction of NOₓ and mercury removal.

The solid waste receiving station can include provisions for the receipt of waste from all or some of collection vehicles, transfer trailers, railcars and barges. If provision is made for receipt of waste in railcars, the facility will include equipment and apparatus for removal of railcar covers, if any, and equipment for the removal of the waste from the railcar. One device which can be used for this last purpose is a Rotary Dumper.

The solid waste shredding apparatus includes a hammermill-type shredder having a vertical or a horizontal main shaft. The shredder is equipped with an explosion suppression system which activates when an explosion has begun in order to quench the explosion before it reaches full force. A further method of avoiding explosions is to provide gas monitoring devices inside and beyond the shredder. Upon identification of a volatile gas level approaching the explosion point, the sensors will cause an increase in the air flow through the shredder and slow down or stop the waste feed to the shredder.

Apparatus for removing ferrous material includes an electromagnet positioned proximate to the shredded waste flow, preferably utilizing a multi-stage overhead, hockey-stick shaped electromagnet.

PRF can be fed directly to the combustion system by means of a belt conveyor feeding onto a metal proprietary "Conveyor System for Shredded Solid Waste Material." The conveyor system is disclosed in U.S. Patent No. 4,997,081. However, other systems for the distribution of PRF into multiple surge storage bins may be substituted therefor. Alternatively, PRF can be fed to the PRF Storage area for subsequent feeding to the boiler feed system.

The boiler feed system includes surge storage bins close to the boiler feed chute to provide a reliable, controllable flow of PRF onto variable speed conveyors which feed PRF into the boiler feed chutes. The boilers are each fitted with multiple feed chutes; one surge storage bin and one variable speed conveyor are required for each feed chute. Each boiler includes a boiler combustion zone (furnace) proximate to said fuel feed chute and horizontal metal travelling grate positioned at the bottom of the furnace.

Ductwork from the exhaust of the boiler gas outlet carries the exhaust gases to an acid gas neutralization system which can be a spray drier absorber or other technology available from manufacturers of alternate equipment for the neutralization of acids. Upon exiting the spray drier, the now neutralized exhaust gases are passed through an electrostatic precipitator or a fabric filter (baghouse) for capture of light particulate (fly ash).

Fly ash from the air preheater hoppers located in the boiler house, fly ash from the acid gas control equipment hoppers, and fly ash from the particulate removal equipment hoppers is collected in either a pneumatic or mechanical conveyor system and stored in a silo. As the silo becomes full, the fly ash is discharged through a pugmill to which is added stabilization materials for the locking in of heavy metals. The fly ash stabilization process is disclosed in U.S. Patent No. 4,917,733. The stabilized fly ash is then discharged into vehicles for removal from the site.

Bottom ash created in the combustion zone is discharged to the bottom ash collection system through proprietary hoppers onto rubber belt conveyors for transport to the receiving bunker of a proprietary Ash Processing Facility. The bottom ash collection system may embody the design disclosed in U.S. Patent No. 4,715,763, incorporated herein by reference. The proprietary ash processing facility is disclosed in U.S. Patent No. 4,669,397, incorporated herein by reference.

The combustion system includes an emissions monitoring system comprising a clean emissions pipe for receiving the combustion residual gases, a clean emission stack in communication with the clean emissions pipe and the clean emissions monitoring means for monitoring contaminant levels within gases exhausted from the clean emissions stack.

For a better understanding of the present invention, reference is made to the following description and drawings, the scope of which is defined by the claims.

### BRIEF DESCRIPTION OF THE DRAWINGS

Figure 1 is schematic block diagram showing a preferred system for manufacturing energy and ash products from solid waste of this invention;
Figure 2 shows a side perspective view of solid waste receiving station, including a partial cutaway view of a waste receiving building;
Figure 3 is a schematic diagram highlighting one portion of the solid waste receiving station of Figures 1 and 2;
Figure 4 is a schematic representation of apparatus for removing ferrous material;
Figure 5 is a plan view of a processed refuse fuel conveyor system of this invention;
Figure 6 is a side sectional view of a processed refuse fuel conveyor system shown in Figure 5;
Figure 7 is a view highlighting one type of tine-type drag elements utilized in a system shown in Figures 5 and 6;
Figure 8 shows the surge storage, variable rate PRF feed apparatus and fuel feed chutes according to the present invention;
Figure 9 is a side cross sectional view of a feeder system of this invention;
Figure 10 is a schematic side cross sectional view of the furnace system of this invention;
Figure 11 is a schematic diagram depicting an air pollution control system of the present invention;
Figure 12 is a schematic diagram of the fly ash silo including the mixing mills and stabilization system; and
Figure 13 is a schematic block diagram highlighting the flow through the bottom ash processing system of this invention.

### DETAILED DESCRIPTION OF THE PREFERRED EMBODIMENTS

In accordance with the present invention, a system and a method for manufacturing energy and ash products from solid waste is provided. The system may be interchangeably referred to as a "shred-and-burn" combustion system.

The "shred-and-burn" combustion system of the present invention was developed to obtain certain advantages over the more widely-used mass-burn methods of waste combustion. These advantages are 1) an increase in the amount of energy produced per unit measure of waste, 2) reduced capital costs, 3) recovery of valuable usable materials prior to combustion and from the ash, 4) reduction in the final amount of material which must be sent to landfills, 5) reduced water usage, 6) elimination of water pollution caused by quenching of ash and 7) stabilization of fly ash to permanently bind heavy metals.

There are three major distinct but interconnected subsystems which makes up the present invention:
- Subsystem 1: The Waste Receiving and Fuel Preparation system (WRFP)
- Subsystem 2: The Fuel Combustion system including generation of energy and air pollution control (FC)
- Subsystem 3: The Ash Processing system (AP) for the separation and recovery of valuable usable materials from the ash manufactured in the FC.

In the preferred arrangement, all three subsystems are connected together on one site. However, it is also contemplated to have the subsystems at sites remote from each other with the appropriate products being transported from site to site by various material moving methods. For example, waste could be received at a WRFP site where it would be processed in accordance with this invention to create a fuel (Processed Refuse Fuel or PRF). The PRF would then be taken by conveyor (if close enough), or by truck, train or other conveyance to the FC. Ash manufactured in the FC could be transported by conveyor (if close enough), or by truck, train or other conveyance to the AP.

For convenience and clarification, in the present invention, the various equipment are described in singular terms. Usually a facility will include multiple systems and subsystems depending on the production capacity of the facility.

Facilities and/or subsystems of the present invention may include a receiving building for the receipt and storage of raw solid waste, a shredder for shredding the waste to a size which will permit burning of the lighter portion of the PRF in suspension to ensure efficient combustion, an indoor area or separate building for the storage of PRF, a boiler for the generation of steam energy, a steam turbine to provide electricity, multiple steam turbines to drive mechanical equipment, steam piping system to provide heating, cooling or industrial process steam.

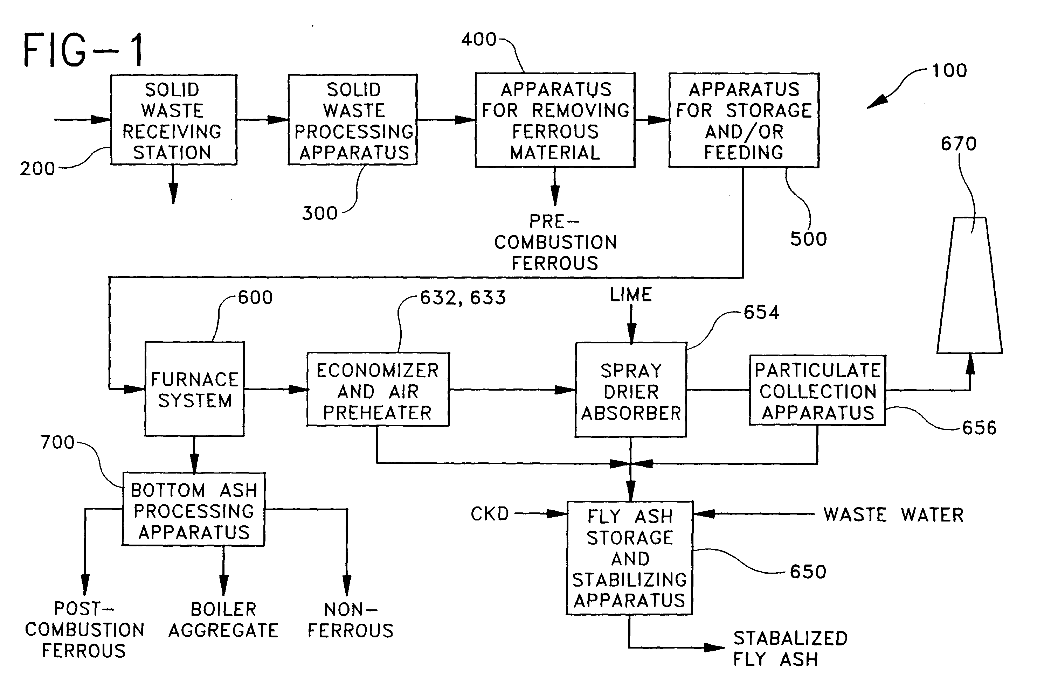

Specifically, referring now to Figure 1, the structure of the system 100 of the present invention is described. Solid waste receiving station 200 receives and stockpiles incoming solid waste, typically municipal and household waste. Operators search the unloaded solid waste for unacceptable waste materials. Examples of unacceptable materials are appliances, large carpets, stringy materials, hazardous waste, highly volatile material, tree stumps, etc. The unacceptable waste materials are transferred to trailers for off-site transportation and disposal. In the case of hazardous waste, the material is stored in a locked storage area until subsequently disposed of in accordance with regulations governing the transport and disposal of hazardous wastes.

The remaining solid waste is then transferred via a conveyor system to solid waste processing apparatus 300 which shreds the solid waste. The shredded waste is separated into a ferrous materials portion and a Processed Refuse Fuel (PRF) portion at an apparatus for removing ferrous material 400. The removed ferrous materials are removed from the site for recycling while the PRF is transferred to the furnace system 600 either directly or via apparatus for storage and/or feeding 500.

The PRF is combusted within furnace system 600 to generate energy and ash products. Heated exhaust gases generated during combustion are output by the furnace system and directed to economizer 633 and air preheater 632 to preheat water and combustion air, respectively. The preheated water and combustion air are used to maintain ideal combusting conditions within the furnace system.

The exhaust gases, which contain, heavy fly ash are transferred through the economizer 633 and air preheater 632 where the heavy fly ash is removed and sent to fly ash storage and stabilizing apparatus 650. There, the fly ash is stabilized for disposal or further processing and reuse or disposal. The exhaust gases are provided to spray drier absorber 654 within which acid gases are neutralized. Exhaust from spray drier absorber 654 is directed to particulate collection apparatus 656 for particulate collection, and then on to continuous emissions monitoring and for stack 670 testing before being exhausted to the air. The particulate collected from apparatus 656 is also provided to storage and stabilizing apparatus 650.

The furnace system 600 also includes means for directing the bottom ash directly to bottom ash processing system 700. BOILER AGGREGATE™, a granular aggregate product distributed by Energy Answers Corporation, Albany, New York, non-ferrous and post-combustion-ferrous materials are separated and collected within bottom ash processing apparatus 700 for further processing.

The present invention, therefore, provides not only a system for generating (manufacturing) energy, producing ash-based building materials, ferrous metals and non-ferrous metals from solid waste, but also solves the ever increasing problem of solid waste disposal through a resource recovery approach. The waste-processing technology described herein overcomes the inherent problems of conventional solid waste combusting facilities which burn waste without prior processing. In particular, because of the varying consistency of solid waste, exacerbated by methods of trash compaction at collection, solid waste tends to coagulate or clog various points within conventional waste processing systems, causing bottlenecking. The consequences of solid waste flow bottlenecking can include equipment damage, excessive pollution and loss of income.

The waste processing flow of this invention is designed to avoid blockages that typifies conventional solid waste processing systems. More particularly, the various interfaces between the subsystems within the present system are designed to accommodate the smooth and free flow of waste PRF and ash products. Waste, PRF and ash products are always caused to flow from an area of lesser volume to an area of greater volume whereby the density of the waste and the probability of blockages may be minimized. Backups rarely occur in the present system.

The present invention can preferably be designed with multiple waste paths and processing subsystem redundancies. There can be several PRF storage areas and multiple paths for transferring the solid waste and PRF within the system. In addition, there can be multiple shredders and apparatus for removing ferrous material from the waste flow. Multiple boilers enable one boiler to be shut down for maintenance or rework without stopping disposal of municipal waste, or production of energy and ash products.

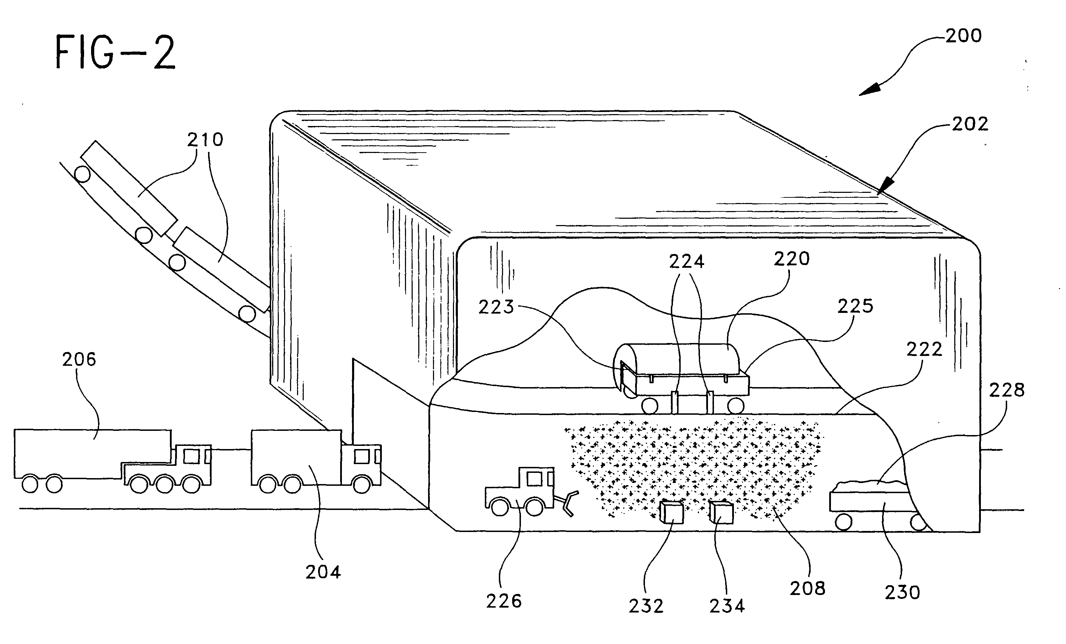

Referring to Figure 2, a preferred embodiment of the present system includes receiving building 202 as part of the solid waste receiving station 200. Receiving building 202 receives incoming solid waste which is to be to be processed, and stockpiles the received solid waste therein. Collection trucks 204 and transfer trailers 206 discharge their loads of solid waste at a portion of the receiving building referred to as the tipping floor 208. The waste unloaded onto the tipping floor 208 is then moved by front end loader or like machinery for processing. Rail cars 210 containing solid waste may also be unloaded within the receiving building 202. The waste content of the rail cars is dropped onto a portion of the tipping floor with the use of a dumping apparatus 220, sometimes referred to as a rotary dumper.

When a rotary dumper 220 is used for dumping the waste onto the tipping floor 208, it effects efficient transfer. First, a loaded railcar 210 is directed onto a movable rail track 222 within the solid waste receiving building proximate the tipping floor 208. The rotary dumper 220 includes a removal apparatus 223 for removing the railcar lid 225 to access the solid waste. The railcar is then clamped on to the moveable track 222 with clamping arms 224. The clamping arms 224 support and grip the moveable track and the railcar, lifting and rotating both approximately 140° so that gravity discharges the solid waste contained therein onto the tipping floor. Another advantage resulting from waste transfer in this way is a concomitant minimization of vehicular traffic flow into and out of the facility due to the large volummetric capacity of the railcars and its effect on the need for road vehicles to truck the waste in.

During the waste unloading and distributing operation at the waste receiving station 200, floor attendants and utility operators inspect the solid waste for hazardous, highly volatile or other unacceptable materials. Identified unacceptable materials 228 are segregated either manually or by machine and are periodically loaded into trailers 230 for off-site transportation. In addition to visual inspection, hand held combustible gas detectors 232 may be used to identify potentially explosive items for removal. Hand held radiation detectors 234 also may be used to identify radioactive material for removal.

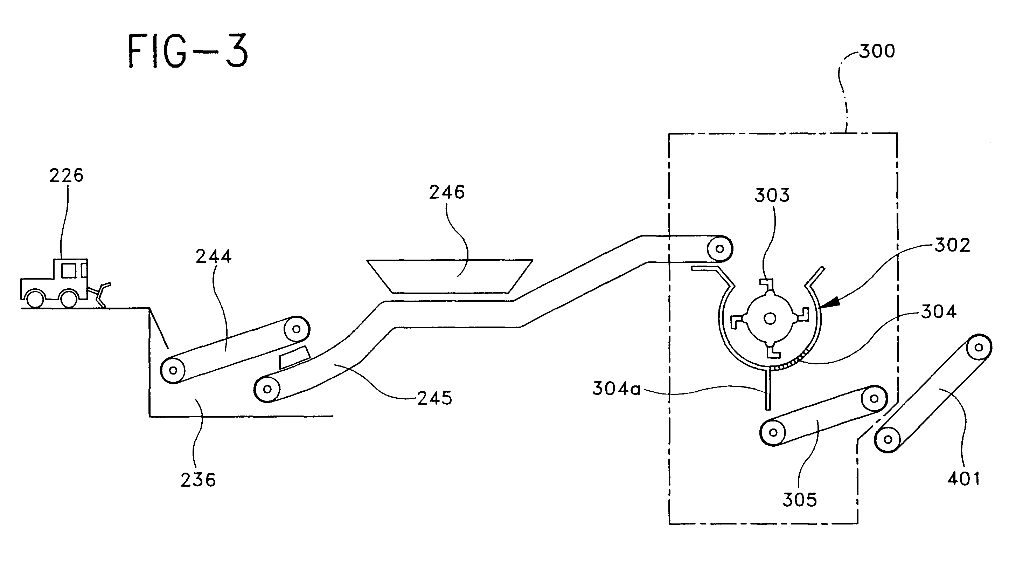

As shown in Figure 3, waste stored in the Receiving Building 202 (Figure 2) is moved by frontend loader 226 into a processing line pit 236 which contains a conveyor 244. Most facilities include multiple processing lines where each processing line is substantially identical. Preferably, processing line pit 236 includes two consecutive metal apron pan-type conveyors, 244 and 245. The processing line is positioned proximate to the tipping floor 208 for convenient access to the solid waste.

When the solid waste is deposited into the processing pit 236, conveyor 244 lifts the waste and deposits it on a conveyor 245. Conveyor 245 is moving at a faster rate of speed than conveyor 244. This differential in conveyer speed causes the depth of the waste on conveyor 245 to be lower than that of conveyor 244 and enables adequate inspection of the waste by attendants at a picking station 246. Unacceptable waste 228 (Fig. 2) is removed at picking station 246 and placed in nearby trailer 230 (Fig. 2) for transport to the backup landfill.

Substantially all of the waste flow processing path is preferably monitored either visually by operators or by video cameras (not shown) for viewing at a central monitoring location. Consequently, any blockages may be quickly identified and remedied. Sensors, and computer processing of sensor-generated information may also be included to fail-safe system operation.

Solid waste processing apparatus 300 (shredding line) is also illustrated in Figure 3, at the end of conveyer 245, downstream from picking station 246. Preferably, however, as distinguished from Figure 3, multiple shredders and conveyors are provided by the present invention. The shredder preferably includes a hammermill-type shredder 302 that contains a rotor and hammers 303 which shred the waste into various size particles with a nominal maximum size of about 15.2 cm (6 inches). The shredding decreases the density and increases the processing flowability of the solid waste. The smaller sized waste displays better flowability and is more readily combustible than unprocessed waste. A further advantage of the shredding of waste is that the shredding process reduces the odor which commonly emanates from solid waste. In addition, shredded waste does not attract rodents and vermin as does non-shredded waste.

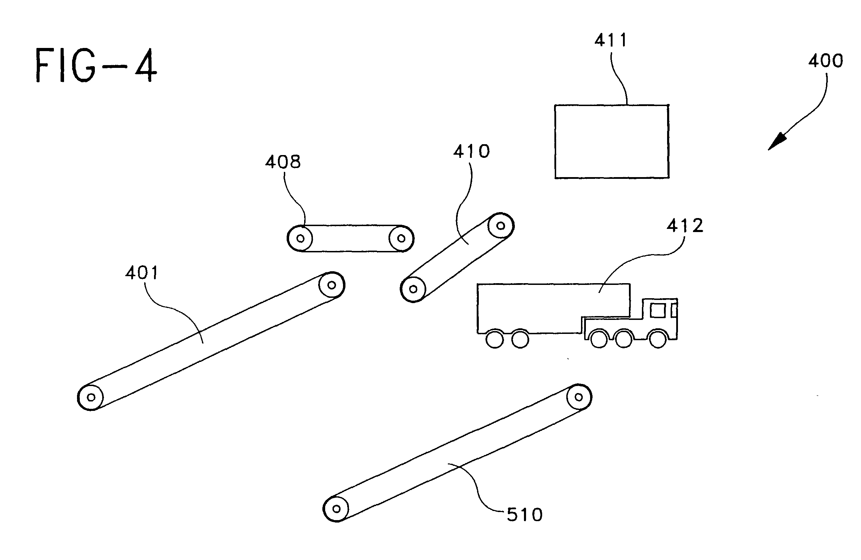

Shredder 302 discharges the shredded waste through grates 304 onto impact-resistant rubber belt conveyor 305 immediately beneath the shredder discharge chute 304A. From conveyor 305, the shredded waste is transferred to rubber belt conveyor 401 to the apparatus for removing ferrous material as shown in Figure 4.

Specifically, as illustrated in Figure 4, the apparatus for removing ferrous material 400 includes rubber belt conveyer 401, which carries the material beneath overhead magnetic separator 408, preferably a hockey-stick shaped electromagnet, for the extraction of ferrous metals. The ferrous metal is discharged onto a conveyor 410 for loading into a storage area 411 or into a transfer vehicle 412. The balance of the shredded waste is now PRF.

The PRF is transferred to storage or onto a fuel feed system 500.

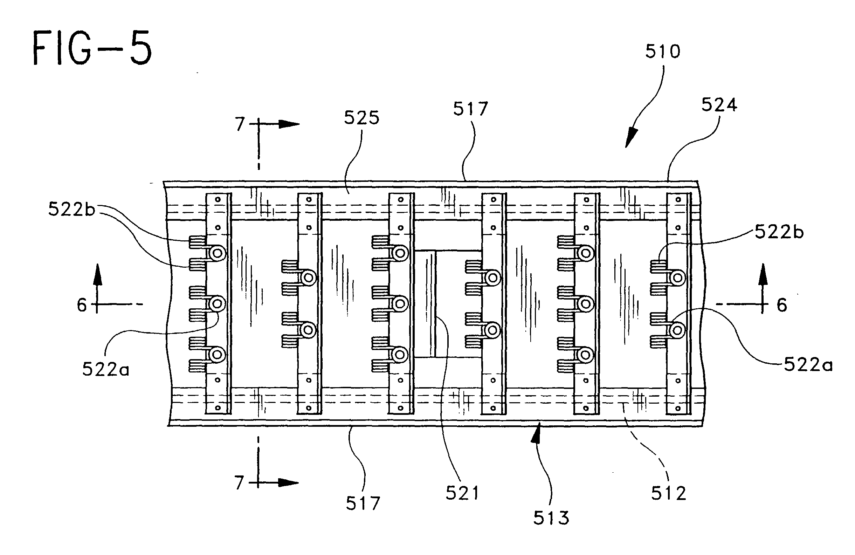

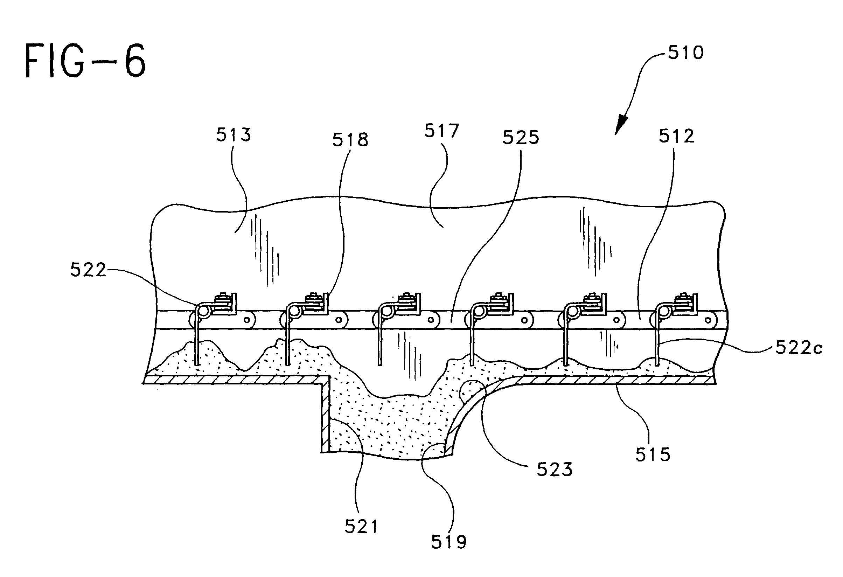

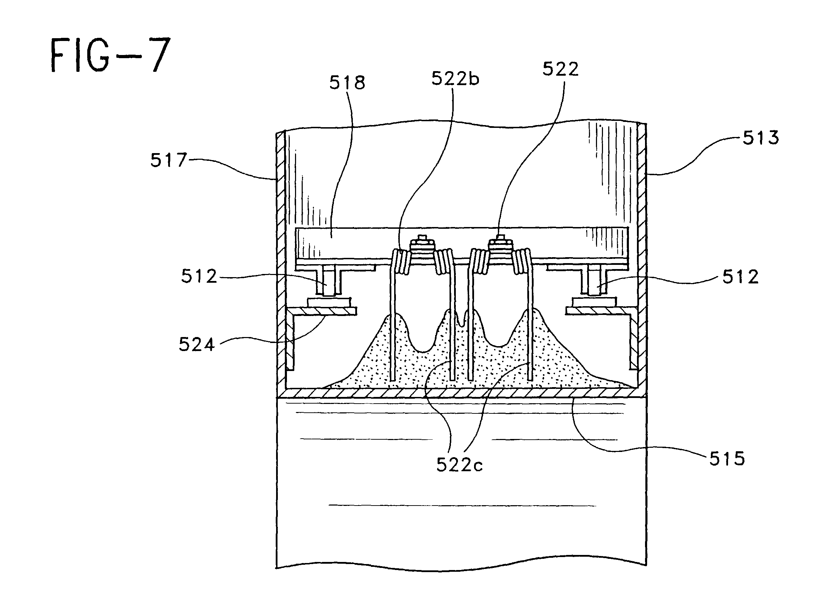

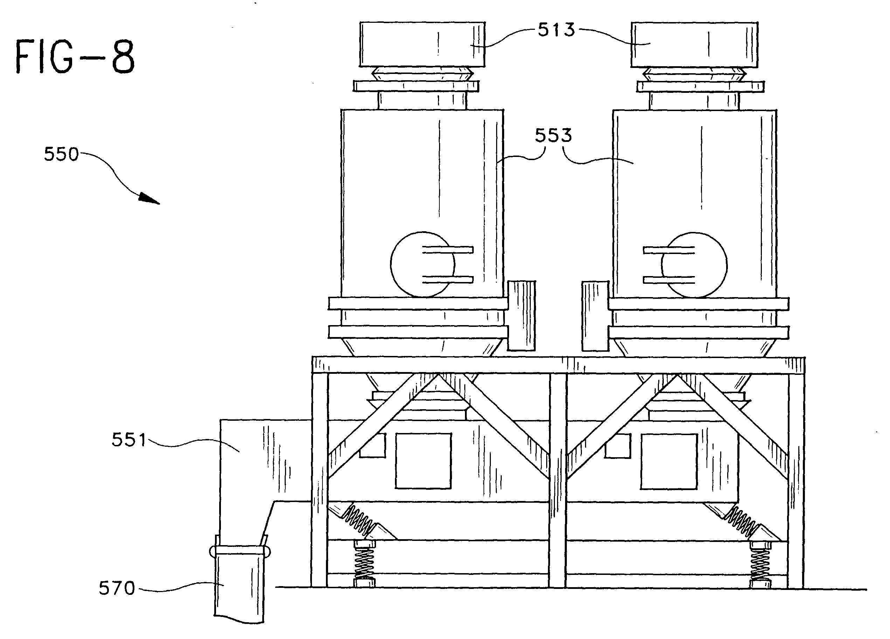

As illustrated in Figures 5, 6 and 7, the fuel feed system utilizes a rubber belt conveyer 510 which carries the PRF to the boiler house (proximate the boilers, see Figure 8) where it is discharged into an elongate, trough-like conveyor enclosure 513. Conveyor enclosure 513 includes a base 515 and a pair of opposing, parallel side walls 517 extending substantially perpendicularly from base 515. The enclosure 513 accordingly maintains a generally trough-like construction.

A plurality of discharge outlets 519 are mounted to the base 515 of the conveyor enclosure 513. The base 515 includes an opening 521 at each outlet 519 to provide access thereto. The trailing upper edge 523 of each discharge outlet 519 is rounded (i.e., cylindrical) or otherwise constructed so as to present no sharp angular corner against which conveyor material may jam or compact, causing blockage.

A flighted drag chain conveyor 525 is positioned within conveyor enclosure 513. The flighted drag chain conveyor 525, preferably includes a pair of drag chains 512, a plurality of flights 518 bolted to the drag chains 512 that extend laterally across the enclosure 513. A plurality of drag elements 522 are bolted to flights 518 and extend downwardly therefrom. The drag chains 512 are supported by a pair of opposing L-shaped brackets 524 which are in turn secured to side walls 517 of conveyor enclosure.

The preferred drag elements 522 are spring mounted, fork tine-type drag elements. One such drag element 522 includes a U-shaped support 522a a pair of coil springs 522b integrally formed with the support, and a pair of tines 522c formed integrally with the respective coil springs 522b extending downwardly towards the base 515 of the conveyor enclosure. For handling of certain wastes, which may become tangled to the tines, a metal plate can be welded across the ends of the tines. As well, different spring systems can be used.

In operation, the drag chain 512 moves from left to right, causing the tines of the drag elements 522 to follow in that direction. The shredded solid waste fuel is urged along by the tines until it falls into one of a number of discharge outlets 519. When an outlet 519 is full, the material simply bypasses the full outlet and is pushed by the tines to the next available outlet 519. Further understanding of the present conveyer system may be derived from a reading of U.S. Patent No. 4,997,081.

There are multiple fuel storage and feed systems at each boiler. Figure 8 shows a typical redundant fuel storage and feed system 550. PRF discharged through outlet 519 of the fuel feed system 510 is captured in a surge bin 553 of feed system 550. Beneath the surge bin is a variable speed vibrating feeder 551 which carries PRF to the vertical chute 570 which feeds the PRF into the front of the boiler. The variable rate feeder 551 is electrically interconnected and is fitted with a level detecting device. When the PRF level drops below the desired level, the surge bin 553 is activated and discharges additional PRF onto the variable rate feeder 551 thereby regulating the flow of PRF into the boiler via chute 570.

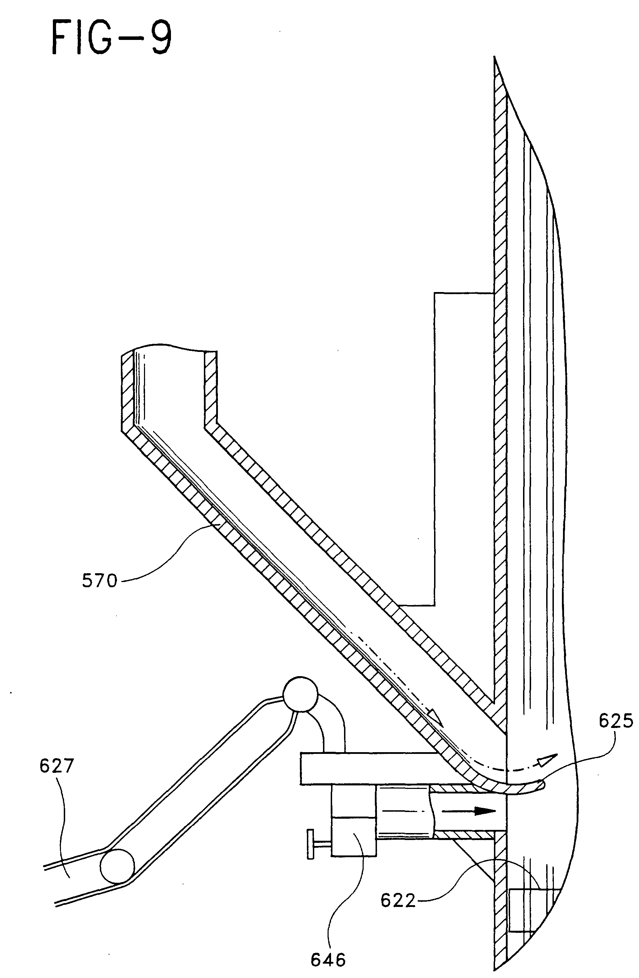

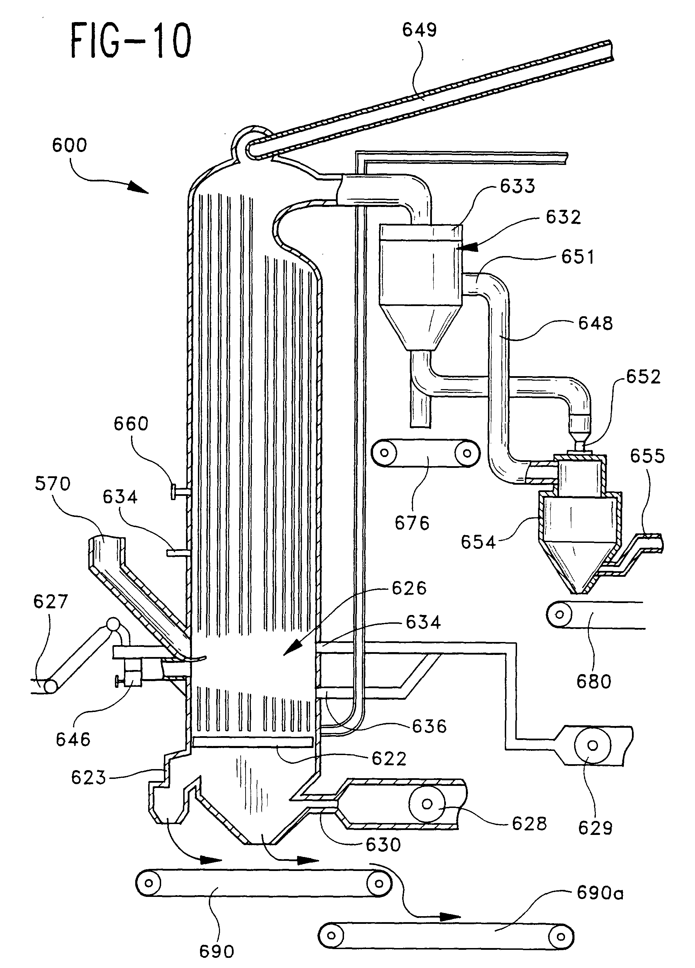

The feeder system for feeding PRF into the boiler is illustrated in Figures 9 and 10. PRF material from variable rate feeder 551 (Figure 8) drops through the gravity feed chute 570 into the waterwall furnace section of the boiler at an elevation of up to 10 feet above a traveling grate 622. When the PRF falls to the bottom of the boiler feed chute, a deflector 625 changes the direction of the flow of the PRF upwards and air from the distribution air fan 627 blows the PRF into the boiler.

As understood by the arrangement of Figure 10, the light material is carried upwards and catches fire within a combustion zone 626 where it is estimated that 40% to 90% of the PRF combusts; the heavier materials, both non-combustible and combustible, drop to the lower portion of the furnace where they land on the horizontal metal travelling grate 622. The grate moves slowly from back to front of the furnace during an adjustable period of time. Air is fed through holes in the grate to provide air for combustion of the combustible materials and to maintain a low temperature at the grate. By the time the heavy material has reached the front of the grate, all the combustibles have been consumed and the remaining ash (the bottom ash) falls off the grate into the proprietary ash hopper 623. Further description of the ash hopper is provided in U.S. Patent No. 4,715,763.

Combustion air is supplied by means of a forced draft fan 628 and an overfire air fan 629. Air for the intake of the overfire air fan is obtained from ducts drawing air from the receiving building 202. Drawing air from the receiving building creates a negative pressure zone in the building. The negative pressure acts to continuously draw air from the outside of the building in. Accordingly, the odor normally emitted from conventional enclosed raw waste storage facilities is eliminated with such a design.

An economizer 633 and an air pre-heater 632 are provided to pre-heat water and combustion air, respectively, before they are introduced into the boilers. The heat source for the economizer and air pre-heater is the exhaust gas leaving the boiler. The preheated water is provided at the boiler water inlet. The pre-heated air directed through two levels of overfire air-ports 634, 636 at the rear wall of the boiler, and one level at the front wall. Overfire air can also be introduced at the side walls in order to provide oxygen for combustion and to maintain flame turbulence. Distribution of air within the furnace in conjunction with high gas residence time resulting from the extended height of the furnace creates high gas temperatures for destruction of dioxins and furans. The high gas temperatures also ensure complete combustion of PRF, maximize steam production and minimize excess air to ensure maximum thermal efficiency within the combustion system.

The controls built into the furnace design also allow a variety of fuels with varying ash contents and combustion characteristics, such as automobile shredder residue and oily filter media, to be effectively combusted in the furnace. The boilers are typically operated at an excess air rate of 60% to 80%. The boilers may also be operated by combusting fuel oil or gas during startup or periods when the waste heating value is too low to support combustion.

The combined stoker/boiler system of this invention provides fuel for combustion, a proper distribution of under-grate air and a moving surface (traveling grate 622) for ash advance. The feeders may include a pneumatic distributor 646 which distributes the heavy fraction of the PRF evenly over the traveling grate 622 surface. A uniform, 15.2 - 20.3cm (6"-8") ash bed depth is typically maintained on the travelling grate 622 and provides for even distribution of air along boiler cross-section, i.e., the stoker length. The traveling grate 622 may be a moving chain/surface assembly supported by a framework of steel side frames and structural steel cross-members.

Because of the combustion of the lighter portions of PRF in suspension and the shallow depth of material on the grate compared to other waste combustion systems, the amount of excess air is low. The low excess air level thus provides high thermal efficiency and therefore high electricity generation per ton of waste. Because of the physical characteristics of the PRF, no refractory linings are required to protect the boiler walls. Therefore, formation of slag does not occur on furnace walls so that slag removal and refractory repair and replacement are not required.

Nitrous Oxides (NOₓ) are removed from the combustion system by a urea-based NOₓ control or selective non-catalytic reduction system SNCR. A 50% urea solution is stored on site and is diluted with process dilution water obtained from the facility's industrial water supply system. The baseline NOₓ level produced by the shred-burn technology for manufacturing ash products and energy from solid waste is low. Therefore, the urea flow rate required to maintain emissions below the permitted level is minimized. The controlled NOₓ levels are maintained at a particular system set point. Urea injection nozzles 660 are provided in the front wall of the boiler. Additional nozzles could be installed in the side or rear walls and/or at different elevations.

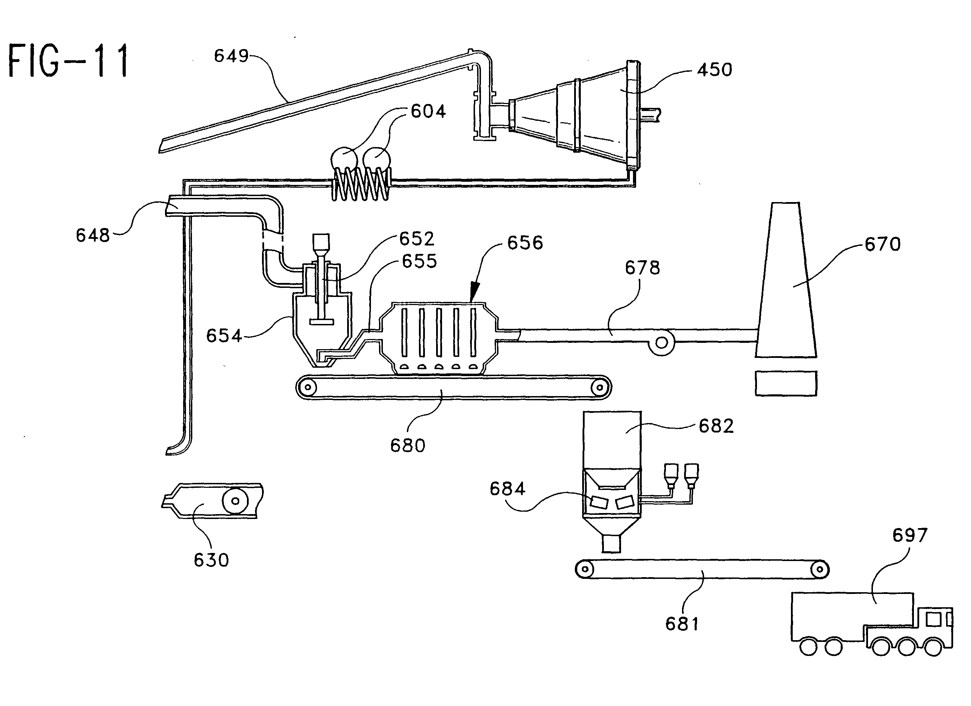

Referring now to Figure 11, steam generated from the combustion of the PRF within furnace system 600 is carried in high pressure pipes 649 to a turbine/generator 450. Turbine/generator 450 extracts steam to provide mechanical or electrical energy therefrom. Exhaust steam from the turbine/ generator is condensed in a series of air-cooled, freeze-protected condensing systems 604, which include multiple variable speed fans (not shown in the figure). The water discharge from the condenser is returned to the boiler feed water system.

Exhaust gases from the boiler are carried in a duct 648 into an acid gas neutralization Spray Dryer Absorber (SDA) 654. Ca(OH)₂ slurry is sprayed through a high speed atomizer wheel 652 into SDA 654. Injection of lime slurry can also be accomplished with the use of specially designed nozzles. Exhaust gases from air preheater outlet 651 enter the SDA at about 193°C (380°F). The Ca(OH)₂ slurry injection rate is controlled automatically in accordance with the stack sulfur dioxide (SO₂) set point by adjusting lime and water input in accordance with the amounts needed based on continuous monitoring of sulfur dioxide in the exhaust gases.

Gases leaving the SDA 654 are carried by ductwork 655 into the particulate collection apparatus 656. Particulate removal can be accomplished by particulate removal equipment 656 consisting of either multistage electrostatic precipitator or by fabric filters within a baghouse. Either apparatus may be the particulate collection apparatus 656.

The collected fly ash after neutralization and stabilization can be either utilized as a raw material in the production of usable products or disposed of in an approved landfill.

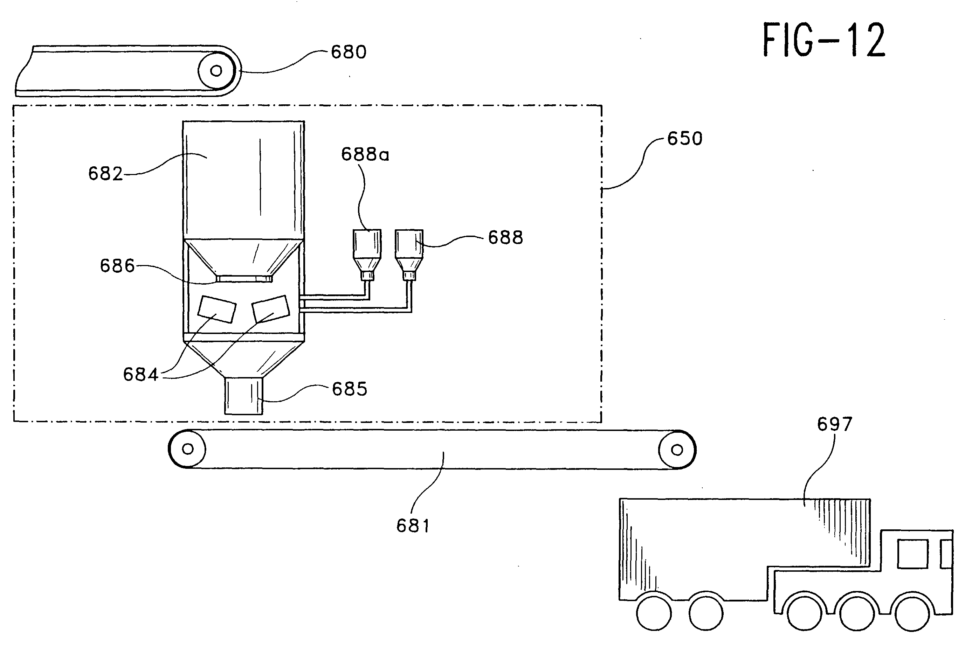

Figure 12 schematically shows the one embodiment of this invention for handling, stabilizing and disposing of fly ash. All fly ash generated in the facility is mechanically conveyed to a fly-ash storage silo 682 located on site. Two mixing mills 684 are provided at the bottom of the ash silo 682 to receive fly ash through a rotary air lock 686. A cementitious agent, such as cement kiln dust combined with water or leachate is pumped into the mixing mills to effect stabilization through chemical reactions.

Water and/or landfill leachate is transported to the system in tanker trucks which unload their contents into the on-site storage tank 688. Kiln dust is delivered to the site by truck and stored in an on-site storage tank 688A. A high pressure pump is provided to pump the water stream into a sparger system located inside each mill 684. The sparger system consists of distribution piping and fine atomization spray nozzles that ensure uniform water application onto the mixing mill contents. In the event that leachate from tanker trucks is not available, waste water generated at the plant can be used in the fly ash stabilization system.

Each mixing mill 684 is provided with a dual screw system equipped with specially designed paddles which ensure uniform mixing and residence times required for the desired stabilization reactions. The mixed process stream is discharged through gravity chutes 685 into positioned trailers 697 underneath the stabilization processing room for transport to landfill, either directly or via conveyor 681. Within about 24 hours, the stabilized fly ash residing in the landfill cells hardens, approaching the consistency of concrete surfaces.

If additional fly ash storage capacity is required, multiple silos can be installed. Further description of the fly ash stabilization system is contained in U.S. Patent No. 4,917,733.

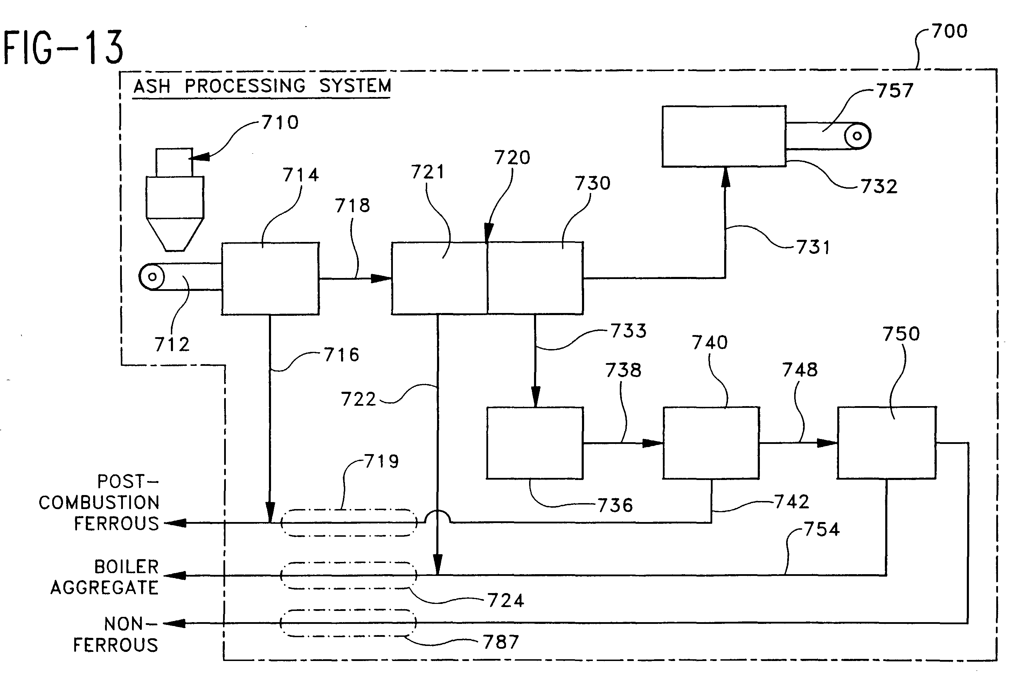

Figure 13 is a flow chart of the Bottom Ash Processing System incorporated in this patent. Bottom ash from the boilers is conveyed on bottom ash conveyor 690 to ash conveyor 690a by which it is input to ash processing facility 700 on the site. The bottom ash may also be transported in vehicles for removal to an ash processing facility located at a remote site. In either case, the bottom ash is first discharged continuously into a storage area within the Ash Processing Facility while the furnace system 600 is burning PRF. Normal procedure is to burn PRF 24 hours per day, 7 days per week. The ash is processed one single shift per day, 7 days per week. Further description of the bottom ash processing system is provided in U.S. Patent No. 4,669,397.

With further reference to Figures 10 and 13, conveyor 690a provides bottom ash from the boilers to storage. From storage, bottom ash is conveyed to the infeed vibrating hopper 710. Hopper 710 conveys the material at a controlled feed rate onto a primary belt conveyor 712. Preferably, permanent magnet system 714 is provided which separates the larger sized a ferrous metal fraction 716 of the ash stream and conveys the ferrous metal fraction to a dedicated trailer 717 (not shown in Figure 13) parked on site via conveyor 719.

The remaining ash 718 is discharged into a primary two-stage trommel system 720. The first stage 721 consists of a plurality of 1.6 cm (5/8") holes. The fraction of ash 718 passing through these holes constitutes BOILER AGGREGATE™ ash product 722 and is passed to a loading conveyor 724 which transports the BOILER AGGREGATE™ ash product to a trailer 716 located at a load out bay 728 for this purpose. The 1.6 cm (5/8")-plus fraction enters the second stage 730 which is provided with a plurality of 10.1 cm (4") holes. The oversize fraction 731 (i.e., greater than 10.1 cm (4") is discharged into a hopper 732 where it is manually sorted for ferrous and non-ferrous content. The 10.1 cm (4")- minus fraction 733 (from the second stage 730) is conveyed by a belt conveyor 734 to an impact mill 736 which reduces the size nominally to 5.1 cm (2")- minus.

The ensuing 5.1 cm (2")-minus ash stream is transported by a belt conveyor 738 to a magnetic head pulley 740 which separates the residual ferrous fraction 742 and discharges the same to transfer belt 719. The transfer belt 719 conveys the residual ferrous fraction 742 into ferrous trailer 717 parked on site. The non-ferrous fraction 748 is discharged into a secondary single stage trammel 750 provided with 1.6 cm (5/8") holes. The screened fraction 752, also characterized as BOILER AGGREGATE™ ash product, is conveyed to a series of belt conveyors 754 to combine with the aggregate fraction separated in the primary trammel 720. The BOILER AGGREGATE™ ash product is discharged via belt conveyer 724 into a container at a bay 723. Non-ferrous, non-BOILER AGGREGATE™ is discharged via conveyor 787.

## Claims

1. A system for generating energy and ash products from solid waste, comprising:
a solid waste receiving station (200) for receiving solid waste;
a solid waste shredding apparatus (300) for generating shredded solid waste from said received waste;
apparatus for removing ferrous material from said shredded solid waste to generate processed refuse fuel (PRF); and
a furnace system (600) for combusting said PRF to generate steam and ash products,
said system also containing apparatuses for transferring said solid waste between said station (200) and said shredding apparatus (300), between said shredding apparatus (300) and said apparatus for removing ferrous material, and an apparatus for tranferring said PRF between said apparatus for removing ferrous material and said furnace system (600), **characterized in that** said transferring apparatuses each reduce the flow density of said waste and said PRF.

2. The system as defined by claim 1, further comprising:
a furnace exhaust pollution control system (654 and 656), wherein said pollution control system captures particulate matter and neutralizes acid gases generated during combustion and present within furnace exhaust gases.

3. The system as defined by claim 2, wherein said furnace exhaust pollution control system (654 and 656) includes means for removing NOₓ formed and present in said exhaust gases.

4. The system defined according to claim 1, wherein said receiving station (200) comprises:
at least one of a collection truck discharge area (208), a trailer discharge area (208), and a rail car transfer apparatus (220) that includes a railcar discharge area (208); and
an area (202) for storing discharged solid waste.

5. The system defined according to claim 1, wherein said apparatus for transferring said solid waste between said station and said shredding apparatus includes at least a first and second conveyor, (244 and 245) the second conveyor (245) operating at a higher rate of speed than the first conveyor (244) such that the depth of solid waste transferred from the first to the second conveyor is reduced.

6. The system defined according to claim 1, wherein said solid waste shredding apparatus (300) may include at least one hammermill-type shredder (302).

7. The system defined according to claim 1, wherein said apparatus for removing ferrous material (400) includes an electromagnet (408) positioned proximate to the flow of said shredded refuse waste, whereby said electromagnet (408) attracts and recovers a substantial portion of ferrous material from the flow of said shredded solid waste.

8. The system defined according to claim 7, wherein said apparatus for transferring includes at least two conveyors (401) in series for transferring shredded waste between said apparatus for shredding and said apparatus for removing ferrous materials.

9. The system defined according to claim 8, wherein said at least two conveyors (401) operate at different speeds and different feed directions to accommodate site specific needs and to reduce the flow density while maintaining a controlled flow volume of said solid waste.

10. The system defined according to claim 8, wherein said apparatus for transferring includes at least a third conveyor (410) for transferring said removed ferrous material from said apparatus for removing ferrous material to said bulk ferrous storage means (411).

11. The system defined according to claim 10, wherein said apparatus for transferring includes at least a fourth conveyor (510) for transferring said PRF from said apparatus for removing ferrous material to said furnace system, said fourth conveyor (510) operating at a speed that reduces and controls the flow density of said PRF.

12. The system defined according to claim 11, wherein said fourth conveyor apparatus (510) includes a mechanism (550) that provides for storage of excess PRF and feeds a metered quantity of said PRF to said feeder system.

13. The system defined according to claim 12, wherein said mechanism (550) for storage includes:
a conveying system (513) for feeding PRF to multiple storage bins (553) and transportating excess PRF thereat for future use where said multiple storage bins are located proximate to the feed chutes (570) through which the PRF is introduced into the furnace.

14. The system defined according to claim 13, wherein said mechanism includes multiple vibrating feeder conveyors (513), multiple furnace feed chutes (570), and means (525) for agitating said storage bins in order to induce PRF therein to be shaken out onto a feeder conveyor to carry the PRF to the furnace feed chutes.

15. The system defined according to claim 14, wherein said mechanism for storage includes a fifth conveyor for removing and transferring the PRF to an auxiliary storage area for later use.

16. The system defined according to claim 1, wherein said furnace system (600) includes at least one boiler into which said processed refused fuel is input for combusting.

17. The system as defined according to claim 16, wherein said at least one boiler, comprises:
a furnace;
a furnace fuel input conduit (570) for inputting PRF to said furnace;
a traveling grate (622) within said furnace;
a combustion zone (626) above said traveling grate (622);
a furnace combustion air intake conduit (634 and 636);
a furnace combustion gas exhaust conduit (648);
a furnace water intake conduit in fluid communication with a plurality of tubes which comprise the walls of said furnace, the superheater, screen tubes and generating tubes; and
an air distributing outlet wherein a substantial amount PRF is fluidized by heated gases in said combustion zone and suspension burned above a traveling grate thereby heating said water to steam.

18. The system defined according to claim 17, wherein said combustion air intake conduit includes means (632) for preheating the air to increase the efficiency of said suspension burning.

19. The system defined according to claim 16, wherein said at least each boiler further includes a nitrous oxide emissions controller.

20. The system defined according to claim 16, wherein each boiler includes a combustion residue recovery system.

21. The system defined according to claim 20, wherein said combustion residue recovery system comprises a dry bottom ash collection apparatus (690) for transporting dry bottom ash to an ash processing facility (700).

22. The system defined according to claim 17, further comprises a steam turbine electrical generator (450) for generating electricity from said generated steam, said steam turbine (450) having direct controlled steam extraction capabilities so that a percentage of the steam can be used directly at one of on and off site locations.

23. The system defined according to claim 22, wherein said steam turbine electrical generator comprises:
a steam turbine in communication with said steam distributing outlet;
an electrical generator in communication with said steam turbine:
an electrical transfer circuit responsive to said electrical generator;
a spent steam discharge conduit; and
a steam extraction port.

24. The system defined according to claim 22, wherein said steam turbine generator (450) further comprises a condenser (604) in communication with said steam return conduit.

25. The system defined according to claim 17, wherein said furnace exhaust pollution control system comprises:
an acid gas neutralization system (654) in communication with said combustion gas exhaust outlet; and
an apparatus for recovering particulate (656) from said exhaust gas.

26. The system defined according to claim 25, wherein said apparatus for recovering particulate (656) includes one of an electrostatic precipitator and baghouse in connection with said acid gas neutralization system.

27. The apparatus defined according to claim 25, further including a fly ash storage and stabilization means (682) in communication with said particulate recovery apparatus.

28. The system defined according to claim 27, wherein said particulate recovery apparatus (656) further comprises a fly ash transfer apparatus for transferring said fly ash to means for storage and stabilization.

29. The system defined according to claim 17, further comprising a clean emissions system responsive to said combustion residual gases.

30. The system defined according to claim 29, wherein said clean emissions system comprises:
a clean emissions pipe in communication with said combustion gas exhaust conduit;
a clean emissions stack in communication with said clean emission pipe; and
a clean emissions monitoring apparatus for monitoring contaminant levels within gases passing through said clean emissions stack.

31. A method for generating energy and ash products from solid waste, comprising the steps of:
receiving solid waste at a waste processing facility (200);
transferring said solid waste to a shredding apparatus (300);
shredding said received solid waste for processing;
transferring said waste to a ferrous materials separator (400);
separating ferrous materials from said shredded solid waste thereby generating processed refuse fuel (PRF);
transferring said removed ferrous materials to ferrous materials storage area (411);
transferring said PRF to said furnace system (600); and
combusting said PRF to generate steam and high quality granular ash, **characterized by** the steps of:
reducing the flow density of said waste and said PRF respectively during said transfers.

32. The method defined by claim 31, further comprising the step of transferring said PRF to a storage area for later use.

33. The method defined by claim 31, further comprising the step of generating electricity from said steam.

34. The method defined according to claim 31, wherein said step of receiving solid waste includes accepting solid waste from at least one of a collection truck (204), a solid waste transfer vehicle (206), a barge, and a railcar (210), and, storing the received solid waste in a solid waste storage area (202).

35. The method defined by claim 34, wherein the step of receiving solid waste from said railcar includes gripping and overturning said railcar to unload said solid waste onto an area (208) having a greater volume than the volume of said railcar thereby decompacting said solid waste.

36. The method as defined by claim 31, wherein said step of separating includes removing ferrous material from said shredded solid waste using at least one electromagnet (408).

37. The method defined according to claim 31, wherein said step of combusting includes generating said steam, combustion residual gases and solid ash residue in at least one boiler.

## Patentansprüche

1. Anlage zur Erzeugung von Energie und Asche enthaltenden Produkten aus festen Abfällen, mit:
einer Station (200) zur Aufnahme fester Abfälle;
einem Zerkleinerungsapparat (300) zur Erzeugung zerkleinerter fester Abfälle aus den aufgenommenen Abfällen;
einem Apparat zur Entfernung eisenhaltigen Materials von den zerkleinerten festen Abfällen, um aus verarbeiteten Abfällen einen Brennstoff (processed refuse fuel PRF) zu erzeugen; und
einem Verbrennungssystem (600) zum Verbrennen von PRF, um Dampf und
Asche enthaltende Produkte zu erzeugen;
wobei die Anlage außerdem Apparate zum Überführen der festen Abfälle zwischen der Station (200) und dem Zerkleinerungsapparat (300) und zwischen dem Zerkleinerungsapparat (300) und dem Apparat zum Entfernen eisenhaltigen Materials sowie einen Apparat zum Überführen von PRF zwischen dem Apparat zum Entfernen eisenhaltigen Materials und dem Verbrennungssystem (600) enthält,
**dadurch gekennzeichnet,**
**daß** die Überführungsapparate jeweils die Flußdichte der Abfälle und von PRF reduzieren.

2. Anlage nach Anspruch 1, ferner mit:
einem System (654 und 656) zur Steuerung der Verschmutzung beim Verbrennungsaustritt, wobei das Verschmutzungssteuersystem die Partikel auffängt und die bei der Verbrennung erzeugten und in den Verbrennungsabgasen enthaltenen sauren Gasen neutralisiert.

3. Anlage nach Anspruch 2, wobei das Verbrennungsabgassteuersystem (654 und 656) eine Einrichtung zum Entfernen von gebildeten und in den Abgasen vorliegenden NOₓ hat.

4. Anlage nach Anspruch 1, wobei die Aufnahmestation (200) folgendes umfaßt:
mindestens einen Abgabebereich (208) für Lastkraftwagen und Lastkraftwagenanhänger und eine Einrichtung (220) für Schienenfahrzeuge, die einen Abgabebereich (208) für die Schienenfahrzeuge aufweist; und
einen Bereich (202) zum Lagern der abgegebenen festen Abfälle.

5. Anlage nach Anspruch 1, wobei der Apparat zum Überführen fester Abfälle zwischen der Station und dem Zerkleinerungsapparat mindestens einen ersten und einen zweiten Förderer (244 und 245) aufweist und der zweite Förderer (245) mit einer höheren Geschwindigkeit als der erste Förderer (244) arbeitet, so dass die Tiefe der von dem ersten zu dem zweiten Förderer überführten festen Abfälle reduziert wird.

6. Anlage nach Anspruch 1, wobei der Zerkleinerungsapparat (300) für die festen Abfälle mindestens eine Schlagmühle (302) aufweist.

7. Anlage nach Anspruch 1, wobei der Apparat (400) zum Entfernen eisenhaltigen Materials einen Elektromagneten (408) aufweist, der nahe dem Fluss der zerkleinerten Abfälle angeordnet ist, wodurch der Elektromagnet (408) einen wesentlichen Teil des eisenhaltigen Materials aus dem Fluss der zerkleinerten festen Abfälle anzieht und zurückgewinnt.

8. Anlage nach Anspruch 7, wobei der Apparat für die Überführung mindestens zwei Förderer (401) in Reihe zum Überführen der zerkleinerten Abfälle zwischen dem Apparat zum Zerkleinern und dem Apparat zum Entfernen eisenhaltigen Materials aufweist.

9. Anlage nach Anspruch 8, wobei mindestens zwei Förderer (401) mit verschiedenen Geschwindigkeiten und in verschiedenen Zuführungsrichtungen arbeiten, um den spezifischen Bedürfnissen an den Aufstellungsorten zu genügen und die Flussdichte zu reduzieren, während ein gesteuertes Flussvolumen der festen Abfälle aufrechterhalten wird.

10. Anlage nach Anspruch 8, wobei der Apparat zum Überführen mindestens einen dritten Förderer (410) zum Überführen des entfernten eisenhaltigen Materials aus dem Apparat zum Entfernen eisenhaltigen Materials zu der Speichereinrichtung (411) für die lose Aufbewahrung des eisenhaltigen Materials aufweist.

11. Anlage nach Anspruch 10, wobei der Apparat zum Überführen mindestens einen vierten Förderer (510) zum Überführen von PRF aus dem Apparat zum Entfernen eisenhaltigen Materials zu dem Verbrennungssystem aufweist und der vierte Förderer (510) mit einer Geschwindigkeit arbeitet, bei der die Flussdichte von PRF reduziert und gesteuert wird.

12. Anlage nach Anspruch 11, wobei der vierte Förderapparat (510) einen Mechanismus (550) zur Speicherung von überschüssigen PRF aufweist, der eine abgemessene Menge von PRF dem Zuführungssystem zuführt.

13. Anlage nach Anspruch 12, wobei der Mechanismus (550) für die Speicherung aufweist:
ein Fördersystem (513) zum Zuführen von PRF zu mehreren Speicherbehältnissen (553) und zum Transport von überschüssigen PRF daraus für eine zukünftige Verwendung, wobei die Speicherbehältnisse an den Zuführungsrutschen (570) angeordnet sind, durch die PRF in das Verbrennungssystem eingeführt wird.

14. Anlage nach Anspruch 13, wobei der Mechanismus mehrere Vibrationszuführungsförderer (513), mehrere Zuführungsrutschen (570) in das Verbrennungssystem und eine Einrichtung (525) zum Durchrühren der Speicherbehältnisse hat, um PRF darin einzugeben, das auf einen Zuführungsförderer ausgeschüttelt wird, um PRF zu den Zuführungsrutschen in das Verbrennungssystem zu transportieren.

15. Anlage nach Anspruch 14, wobei der Mechanismus zur Speicherung einen fünften Förderer zum Entfernen und Transferieren von PRF zu einem Hilfsspeicherbereich für eine spätere Verwendung hat.

16. Anlage nach Anspruch 1, wobei das Verbrennungssystem (600) mindestens einen Kocher aufweist, in den der Brennstoff aus verarbeiteten Abfällen zum Verbrennen eingegeben wird.

17. Anlage nach Anspruch 16, wobei der mindestens eine Kocher umfasst:
einen Ofen;
eine Ofen-Brennstoffeingabeleitung (570) zur Eingabe von PRF in den Ofen;
einen Wanderrost (622) innerhalb des Ofens;
eine Verbrennungszone (626) oberhalb des Wanderrostes (622);
eine Ofen-Verbrennungslufteinlassleitung (634 und 636);
eine Ofen-Verbrennungsgasauslassleitung (648);
eine Ofen-Wassereinlassleitung, die in einer Strömungsmittelverbindung mit mehreren Rohren steht, die die Wände des Ofens, den Überhitzer, Schirmrohre und Erzeugungsrohre umfassen; und
einen Luftverteilungsauslass, in dem ein wesentlicher Betrag von PRF durch in der Verbrennungszone erhitzte Gase und eine oberhalb eines Wanderrostes verbrannte Suspension verwirbelt wird, wodurch das Wasser durch Hitze in Dampf umgewandelt wird.

18. Anlage nach Anspruch 17, wobei die Verbrennungslufteinlassleitung eine Einrichtung (632) zum Vorerhitzen der Luft aufweist, um die Effizienz der Verbrennung der Suspension zu steigern.

19. Anlage nach Anspruch 16, wobei der mindestens eine Kocher ferner jeweils eine Steuereinheit für die Stickstoffoxidabgabe aufweist.

20. Anlage nach Anspruch 16, wobei jeder Kocher ein Rückgewinnungssystem für die Verbrennungsrückstände hat.

21. Anlage nach Anspruch 20, wobei das Rückgewinnungssystem für die Verbrennungsrückstände einen Sammelapparat (690) für Trockenbodenasche zum Transport der Trockenbodenasche zu einer Aschenverarbeitungseinrichtung (700) hat.

22. Anlage nach Anspruch 17, bei der ferner ein elektrischer Dampfturbinen-Generator (450) vorgesehen ist, um aus dem erzeugten Dampf Elektrizität zu erzeugen, wobei die Dampfturbine (450) direkt gesteuerte Dampfextraktionseigenschaften hat, so dass ein Bruchteil des Dampfes direkt an einem der Ein- und Ausgabeorte verwendet werden kann.

23. Anlage nach Anspruch 22, wobei der elektrische Dampfturbinen-Generator aufweist:
eine in Verbindung mit dem Dampfverteilungsauslass stehende Dampfturbine;
einen in Verbindung mit der Dampfturbine stehenden elektrischen Generator;
eine auf den elektrischen Generator ansprechende elektrische Transferschaltung;
eine Abgabeleitung für den verbrauchten Dampf; und
eine Dampfextraktionsöffnung.

24. Anlage nach Anspruch 22, wobei der Dampfturbinen-Generator (450) ferner einen mit der Dampfrückleitung in Verbindung stehenden Kondensator (604) aufweist.

25. Anlage nach Anspruch 17, wobei das Verschmutzungssteuersystem für die Ofenabgase aufweist:
ein in Verbindung mit dem Auslass für die Verbrennungsabgase stehendes Neutralisationssystem (654) für die sauren Gase; und
einen Apparat (656) für die Rückgewinnung der Partikel aus dem Abges.

26. Anlage nach Anspruch 25, wobei der Apparat (656) für die Rückgewinnung der Partikel einen elektrostatischen Ausfällapparat oder ein in Verbindung mit dem Neutralisationssystem für saure Gase stehendes Taschenhaus aufweist.

27. Anlage nach Anspruch 25, bei der ferner eine Flugaschenspeicher- und Stabilisierungseinrichtung (682) in Verbindung mit dem Partikel-Rückgewinnungsapparat steht.

28. Anlage nach Anspruch 27, wobei der Partikel-Rückgewinnungsapparat (656) ferner einen Flugaschen-Transferapparat zum Transferieren der Flugasche zu der Einrichtung zum Speichem und Stabilisieren aufweist.

29. Anlage nach Anspruch 17, bei der ferner ein auf die zurückgebliebenen Verbrennungsgase ansprechendes Emissionssystem für saubere Abgase vorgesehen ist.

30. Anlage nach Anspruch 29, wobei das Emissionssystem für saubere Abgase aufweist:
eine Emissionsleitung für saubere Abgase, die in Verbindung mit der Abgasleitung für die Verbrennungsgase steht;
einen Emissionsschacht für saubere Abgase, der in Verbindung mit der Emissionsleitung für saubere Abgase steht, und
einen Anzeigeapparat für saubere Emissionen zur Anzeige des durch den Emissionsschacht für saubere Abgase strömenden Kontaminierungspegels.

31. Verfahren zur Erzeugung von Energie und Asche enthaltenden Produkten aus festen Abfällen mit folgenden Schritten:
Aufnahme fester Abfälle an einer Abfallverarbeitungseinrichtung (200); Transferieren der festen Abfälle zu einem Zerkleinerungsapparat (300);
Zerkleinern der aufgenommenen festen Abfälle zwecks Verarbeitung;
Transferieren der Abfälle zu einem Separator (400) für eisenhaltige Materialien;
Trennen der eisenhaltigen Materialien von den zerkleinerten festen Abfällen, wodurch aus den verarbeiteten Abfällen ein Brennstoff (PRF) erzeugt wird;
Transferieren der entfernten eisenhaltigen Materialien zu einem Speicherbereich (411) für eisenhaltige Materialien;
Transferieren von PRF zu einem Verbrennungssystem (600); und
Verbrennen von PRF zur Erzeugung von Dampf und körniger Asche hoher Qualität,
**gekennzeichnet durch** folgende Schritte:
jeweiliges Reduzieren der Flussdichte der Abfälle und von PRF bei den Transfers.

32. Verfahren nach Anspruch 31, wobei ferner der Schritt des Transferierens von PRF zu einem Speicherbereich für spätere Verwendung vorgesehen ist.

33. Verfahren nach Anspruch 31, wobei ferner der Schritt zur Erzeugung von Elektrizität aus dem Dampf vorgesehen ist.

34. Verfahren nach Anspruch 31, wobei der Schritt der Aufnahme fester Abfälle die Annahme fester Abfälle aus mindestens einem aufsammelnden Lastkraftwagen (204), einem Transferfahrzeug (206) für feste Abfälle, einer Schute und einem Eisenbahnwagen (210) sowie die Speicherung der aufgenommenen festen Abfälle in einem Speicherbereich (202) für feste Abfälle umfasst.

35. Verfahren nach Anspruch 34, wobei der Schritt der Aufnahme fester Abfälle aus dem Eisenbahnwagen das Ergreifen und Umdrehen des Eisenbahnwagens zum Entladen der festen Abfälle auf einen Bereich (208) mit einem größeren Rauminhalt als der des Eisenbahnwagens umfasst, wodurch die festen Abfälle aufgelockert werden.

36. Verfahren nach Anspruch 31, wobei ferner der Trennungsschritt das Entfernen des eisenhaltigen Materials aus den zerkleinerten festen Abfällen unter Verwendung von mindestens einem Elektromagneten (408) umfasst.

37. Verfahren nach Anspruch 31, wobei der Verbrennungsschritt das Erzeugen von Dampf und Verbrennen residueller Gase und fester Ascherückstände in mindestens einem Kocher umfasst.

## Revendications

1. Un système destiné à générer de l'énergie et des cendres à partir de déchets solides, système comprenant ;
une station de réception de déchets (200) destinée à recevoir des déchets solides ;
un appareillage de déchiquetage de déchets solides (300) destiné à générer des déchets solides déchiquetés depuis lesdits déchets reçus ;
un appareillage destiné à éliminer les matières ferreuses provenant desdits déchets solides déchiquetés en vue de générer un carburant à base de détritus traités (PRF) ; et
un système de four (600) destiné à brûler ledit PRF en vue de générer de la vapeur d'eau et des cendres,
ledit système contenant également des appareillages destinés à transférer lesdits déchets solides entre ladite station (200) et ledit appareillage de déchiquetage (300), entre ledit appareillage de déchiquetage (300) et ledit appareillage destiné à éliminer les matières ferreuses, et un appareillage pour transférer ledit PRF entre ledit appareillage destiné à éliminer les matières ferreuses et ledit système de four (600), **caractérisé en ce que** lesdits appareillages de transfert réduisent chacun la densité d'écoulement desdits déchets et dudit PRF.

2. Le système selon la revendication 1, comprenant au surplus un système de contrôle de la pollution des produits d'évacuation du four (654 et 656), dans lequel ledit système de contrôle de pollution capture les matières en particules et neutralise les gaz acides générés au cours de la combustion et qui sont présents dans les gaz d'évacuation du four.

3. Le système selon la revendication 2, dans lequel ledit système de contrôle de la pollution des produits d'évacuation du four (654 et 656) comportent des moyens pour l'élimination des oxydes d'azote formés et présents dans lesdits gaz d'évacuation.

4. Le système selon la revendication 1, dans lequel ladite station de réception (200) comprend :
au moins une zone de décharge des camions de ramassage (208), une zone de décharge de remorque (208) et un appareillage de transfert de véhicule sur rail (220) comprenant une zone de décharge de wagons (208) ; et
une zone (202) de stockage des déchets solides déchargés.

5. Le système selon la revendication 1, dans lequel ledit appareillage de transfert desdits déchets solides entre ladite station et ledit appareillage de déchiquetage comporte au moins un premier et un second convoyeur (244 et 245), le second convoyeur (245) fonctionnant à une vitesse supérieure à celle du premier convoyeur (244), de telle manière que l'épaisseur des déchets solides transférés du premier au second convoyeur soit réduite.

6. Le système selon la revendication 1, dans lequel ledit appareillage de déchiquetage de déchets solides (300) peut comporter au moins un déchiqueteur du type à marteaux (302).

7. Le système selon la revendication 1, dans lequel ledit appareillage pour l'élimination des matières ferreuses (400) comporte un électro-aimant (408) disposé à proximité de l'écoulement desdits déchets déchiquetés, grâce à quoi, ledit électro-aimant (408) attire et recueille une portion substantielle de matière ferreuse dans l'écoulement desdits déchets solides déchiquetés.

8. Le système selon la revendication 7, dans lequel ledit appareillage pour le transfert comporte au moins deux convoyeurs (401) en série destinés à transférer les déchets déchiquetés entre ledit appareillage de déchiquetage et ledit appareillage d'élimination des matières ferreuses.

9. Le système selon la revendication 8, dans lequel lesdits deux convoyeurs (401) fonctionnent à des vitesses différentes et à des directions d'alimentation différentes de manière à s'adapter à des besoins spécifiques d'emplacement et à réduire la densité d'écoulement tout en conservant un volume d'écoulement contrôlé desdits déchets solides.

10. Le système selon la revendication 8, dans lequel ledit appareillage de transfert comporte au moins un troisième convoyeur (410) destiné à transférer lesdites matières ferreuses éliminées depuis ledit appareillage, en vue d'éliminer les matières ferreuses des moyens de stockage ferreux accumulés (411).

11. Le système selon la revendication 10, dans lequel ledit appareillage de transfert comporte au moins un quatrième convoyeur (510) destiné à transférer ledit PRF depuis ledit appareillage d'élimination des matières ferreuses jusqu'audit système de four, ledit quatrième convoyeur (510) fonctionnant à une vitesse qui réduit et contrôle la densité d'écoulement dudit PRF.

12. Le système selon la revendication 11, dans lequel ledit quatrième appareillage convoyeur (510) comporte un mécanisme (550) assurant le stockage de l'excès de PRF et qui envoie une quantité mesurée dudit PRF audit système d'alimentation.

13. Le système selon la revendication 12, dans lequel ledit mécanisme de stockage (550) comporte :
un système de convoyage (513) destiné à envoyer le PRF à une multiplicité de volumes de stockage (553) et à transporter l'excès de PRF en vue d'un usage ultérieur, dans lequel ladite multiplicité de volumes de stockage sont disposés à proximité des glissières d'alimentation (570) par lesquelles le PRF est introduit dans le four.

14. Le système selon la revendication 13, dans lequel ledit mécanisme comporte une multiplicité de convoyeurs d'alimentation à vibration (513), une multiplicité de glissières d'alimentation du four (570) et des moyens (525) pour agiter lesdits volumes de stockage en vue d'amener le PRF qu'ils contiennent à être secoué jusque vers un convoyeur d'alimentation emmenant le PRF aux glissières d'alimentation du four.

15. Le système selon la revendication 14, dans lequel ledit mécanisme de stockage comporte un cinquième convoyeur destiné à extraire et transférer le PRF jusqu'à une zone auxiliaire de stockage en vue d'une utilisation ultérieure,

16. Le système selon la revendication 1, dans lequel ledit système de four (600) comporte au moins une chaudière dans laquelle ledit carburant à base de déchets traités est introduit en vue de sa combustion.

17. Le système selon la revendication 16, dans lequel au moins une chaudière comprend :
un four ;
un conduit d'introduction de carburant dans le four (570) pour l'introduction de PRF dans ce four ;
une grille de transfert (622) à l'intérieur de ce four ;
une zone de combustion (626) située au-dessus de ladite grille de transfert (622);
un conduit d'introduction d'air de combustion dans le four (634 et 636);
un conduit d'évacuation de gaz de combustion du four (648);
un conduit d'introduction d'eau dans le four en communication fluidique avec une pluralité de tubes constituant les parois dudit four, le surchauffeur, des tubes de tamisage et des tubes de génération ; et
une sortie de distribution d'air dans laquelle une quantité substantielle de PRF est fluidisée par les gaz chauffés dans ladite zone de combustion et brûlée en suspension au-dessus d'une grille de transfert en échauffant ainsi ladite eau en vapeur d'eau.

18. Le système selon la revendication 17, dans lequel ledit conduit d'admission d'air de combustion comporte des moyens (632) pour préchauffer l'air en vue d'augmenter l'efficacité de la combustion en suspension.

19. Le système selon la revendication 16, dans lequel au moins l'une desdites chaudières comporte au surplus un contrôleur d'émission d'oxydes d'azote.

20. Le système selon la revendication 16, dans lequel chaque chaudière comporte un système de récupération de résidus de combustion.

21. Le système selon la revendication 20, dans lequel ledit système de récupération de résidus de combustion comprend au moins un appareillage de collecte de cendres sèches (690) destiné à transporter les cendres sèches vers une installation de traitement de cendres (700).

22. Le système selon la revendication 17, comprenant au surplus un générateur électrique à turbine de vapeur d'eau (450) destiné à générer de l'électricité à partir de ladite vapeur d'eau générée, ladite turbine à vapeur d'eau (450) comportant des installations d'extraction de vapeur d'eau à contrôle direct telles qu'un certain pourcentage de la vapeur d'eau peut être utilisé directement sur l'un et l'autre des sites situés à proximité et au-delà.

23. Le système selon la revendication 22, dans lequel le générateur électrique à turbine à vapeur d'eau comprend :
une turbine à vapeur d'eau en communication avec l'évacuation de distribution de vapeur d'eau ;
un générateur électrique en communication avec ladite turbine à vapeur d'eau;
un circuit de transfert électrique sensible audit générateur électrique ;
un conduit d'évacuation de vapeur d'eau usée ; et
un orifice d'extraction de vapeur d'eau.

24. Le système selon la revendication 22, dans lequel ledit générateur à turbine à vapeur d'eau (450) comprend au surplus un condenseur (614) en communication avec ledit conduit de retour de vapeur d'eau.

25. Le système selon la revendication 17, dans lequel ledit système de contrôle de pollution de l'évacuation du four comprend :
un système de neutralisation de gaz acides (654) en communication avec ladite évacuation de gaz de combustion ; et
un appareillage pour la récupération des produits particulaires (656) contenus dans lesdits gaz d'évacuation.

26. Le système selon la revendication 25, dans lequel ledit appareillage de réception des matières particulaires (656) comprend au moins un précipitateur électrostatique ou un système à poche relié au système de neutralisation des gaz acides.

27. L'appareillage selon la revendication 25, comprenant des moyens de stockage et de stabilisation de cendres folles (682) communiquant avec ledit appareillage de récupération des matières particulaires.

28. Le système selon la revendication 27, dans lequel ledit appareillage de récupération des matières particulaires (656) comprend au surplus un appareillage de transfert de cendres folles destiné à transférer lesdites cendres folles à des moyens de stockage et de stabilisation.

29. Le système selon la revendication 17, comprenant au surplus un système d'émissions propres sensibles aux dits cas résiduels de combustion.

30. , Le système selon la revendication 29, dans lequel ledit système d'émissions propres comprend:
une tuyauterie d'émissions propres en communication avec ledit conduit d'évacuation des gaz de combustion ;
une cheminée d'émissions propres en communication avec ladite tuyauterie d'émissions propres ; et
un appareillage de contrôle des émissions propres destiné à surveiller le niveau des produits contaminants présents dans les gaz traversant ladite cheminée d'émissions propres.

31. Une méthode pour créer de l'énergie et des cendres à partir de déchets solides, comprenant les étapes consistant à :
recevoir des déchets solides dans une installation de traitement de déchets (200);
transférer lesdits déchets solides à un appareillage de déchiquetage (300) ;
déchiqueter lesdits déchets solides reçus en vue de leur traitement ;
transférer lesdits déchets à un séparateur de matières ferreuses (400) ;
séparer les matières ferreuses desdits déchets solides déchiquetés en créant ainsi un carburant à base de déchets traités PRF ;
transférer lesdites matières ferreuses éliminées vers une zone de stockage de matière ferreuse (411) ;
transférer ledit PRF audit système de four (600) ; et
faire brûler ledit PRF de manière à créer de la vapeur d'eau et des cendres de qualité élevée, **caractérisée par** les étapes consistant à :
réduire la densité d'écoulement desdits déchets et dudit PRF respectivement au cours desdits transferts.

32. La méthode selon la revendication 31, comportant au surplus l'étape consistant à transférer lesdits PRF à une zone de stockage en vue d'une utilisation ultérieure.

33. La méthode définie à la revendication 31, comprenant au surplus l'étape consistant à créer de l'électricité à partir de ladite vapeur d'eau.

34. La méthode selon la revendication 31, dans laquelle ladite étape de réception de déchets solides consiste à accepter des déchets solides provenant d'au moins un camion de collecte (204), d'un camion de transfert de déchets solides (206), d'une péniche, d'un wagon de chemin de fer (210), et à stocker lesdits déchets solides reçus dans une zone de stockage de déchets solides (202).

35. La méthode selon la revendication 34, dans laquelle l'étape de réception des déchets solides à partir dudit wagon de chemin de fer consiste à agripper et retoumer ledit wagon de manière à décharger lesdits déchets solides sur une zone (208) ayant un volume supérieur au volume dudit wagon, de manière à décompacter lesdits déchets solides.

36. La méthode selon la revendication 31, dans laquelle ladite étape de séparation comporte l'élimination des matières ferreuses des déchets solides déchiquetés en utilisant au moins un électro-aimant (408).

37. La méthode selon la revendication 31, dans laquelle ladite étape de combustion consiste à donner naissance à ladite vapeur d'eau, aux dits gaz résiduels de combustion et aux résidus de cendres solides dans au moins une chaudière.
